# EUROPÄISCHE PATENTANMELDUNG

(11) **EP 3 029 628 A1**
(43) Veröffentlichungstag der Anmeldung: **08.06.2016**
(21) Anmeldenummer: 14196504.6
(22) Anmeldetag: 05.12.2014
(51) Int. Cl.: G06T 5/00, G06K 9/00

(54) **Verfahren zum Erzeugen eines Trainingsbildes**

(71) Anmelder: Delphi Technologies, Inc., Troy, MI 48007 (US)
(72) Erfinder: Haselhoff, Anselm Stephan, 42285 Wuppertal (DE); Müller, Dennis, 40699 Moers (DE); Meuter, Mirko Nicolas, 40699 Erkrath (DE); Nunn, Christian Markus, 42499 Hückeswagen (DE)
(74) Vertreter: Manitz, Finsterwald & Partner GbR

(57) **Zusammenfassung**

Bei einem Verfahren zum Erzeugen eines Trainingsbilds, welches ein zu erkennendes Objekt in einer natürlichen Objektumgebung zeigt, wird das Trainingsbild als synthetisches Bild durch Kombination eines von einer Kamera aufgenommenen Basisbilds und eines Template-Bilds erzeugt, indem mittels eines Shift-Map-Algorithmus ein Strukturmerkmal aus dem Basisbild entfernt und durch ein dem Template-Bild entnommenes Strukturmerkmal ersetzt wird.

## Beschreibung

Die vorliegende Erfindung betrifft ein Verfahren zum Erzeugen eines, insbesondere für das Einlernen eines kamerabasierten Objekterkennungssystems vorgesehenen, Trainingsbildes, welches ein zu erkennendes Objekt in einer natürlichen Objektumgebung zeigt.

Kamerabasierte Objekterkennungssysteme erlangen insbesondere in der Kraftfahrzeugtechnik zunehmende Bedeutung. Computergestützte Bildverarbeitungssysteme sind in der Lage, in aufgenommenen Kamerabildern verschiedene interessierende Objekte wie Verkehrszeichen, Fahrspurmarkierungen, Fußgänger oder dergleichen zuverlässig zu identifizieren. Um die entsprechenden Erkennungsalgorithmen zu entwickeln und/oder anzupassen, werden häufig so genannte Einlernverfahren oder Trainingsverfahren eingesetzt. Hierbei wird dem Bildverarbeitungssystem eine Reihe von Trainingsbildern präsentiert. Dabei handelt es sich um Beispielbilder, welche typische zu erkennende Objekte in der entsprechenden Objektumgebung zeigen.

Auf dem Fachgebiet der bildbasierten Objekterkennung sind verschiedene Einlernverfahren bekannt, die jedoch alle eine beträchtliche Anzahl an unterschiedlichen Trainingsbildern benötigen, um ein akzeptables Einlernergebnis zu erzielen. In vielen praktischen Fällen wird mit so genannten Klassifizierern gearbeitet, mittels welchen die in einem Bild erkannten Objekte in unterschiedliche diskrete Objektklassen eingeteilt werden. Insbesondere bei Anwendungen mit einer relativ großen Anzahl von Klassen besteht das Problem, dass die Beschaffung von Trainingsbildern zeitaufwändig und mühsam ist. Dieses Problem kann sich dadurch noch verschlimmern, dass die Objekte bestimmter Klassen in der Realität vergleichsweise selten vorkommen. Beispielsweise gibt es in Deutschland 14 verschiedene Varianten von Verkehrszeichen, die Geschwindigkeitsbeschränkungen angeben - von 5 km/h bis zu 130 km/h. Es versteht sich, dass es in diesem Fall außerordentlich aufwändig ist, zu allen 14 Klassen Datensätze ausreichender Größe zu generieren, insbesondere für die Klassen mit seltener vorkommenden Verkehrszeichen wie zum Beispiel die Geschwindigkeitsbeschränkungen 5 km/h oder 110 km/h.

Es besteht daher ein Bedarf an einem vereinfachten Verfahren zum Erzeugen von Trainingsbildern.

Die Lösung dieser Aufgabe erfolgt durch ein Verfahren mit den Merkmalen des Anspruchs 1.

Erfindungsgemäß wird das Trainingsbild als synthetisches Bild durch Kombination eines von einer Kamera aufgenommenen Basisbilds und eines Template-Bilds, also gewissermaßen einer Bildvorlage, erzeugt, indem mittels eines Shift-Map-Algorithmus ein Strukturmerkmal aus dem Basisbild entfernt und durch ein dem Template-Bild entnommenes Strukturmerkmal ersetzt wird.

Auf diese Weise kann ein und dasselbe Basisbild mit unterschiedlichen Objekten versehen werden. Beispielsweise kann in einem Basisbild, das in üblicher Weise mittels einer Kamera aufgenommen wurde und in diesem Kontext auch als natürliches Bild bezeichnet wird, ein Schild für eine Geschwindigkeitsbeschränkung auf 50 km/h durch ein Schild für eine Geschwindigkeitsbeschränkung auf 5 km/h ersetzt werden. Durch die Verwendung solcher synthetischer Trainingsbilder kann der Aufwand für die Datenbereitstellung beträchtlich verringert werden. Die Verwendung des Shift-Map-Algorithmus sorgt dafür, dass das erzeugte synthetische Bild ein ebenso natürliches Erscheinungsbild aufweist wie das Basisbild. Während bei einem direkten Ersetzen eines dem betreffenden Objekt entsprechenden Bildbereichs unweigerlich erkennbare Unstimmigkeiten hinsichtlich der Beleuchtungsverhältnisse entstehen, wird beim Ersetzen eines Strukturmerkmals mittels des Shift-Map-Algorithmus das Beleuchtungsniveau und das allgemeine Erscheinungsbild des natürlichen Basisbilds durchgängig aufrecht erhalten.

Weiterbildungen der Erfindung sind den abhängigen Ansprüchen, der Beschreibung sowie der beigefügten Zeichnung zu entnehmen.

Vorzugsweise wird das Ersetzen des Strukturmerkmals ausschließlich durch Umordnen von Pixeln des Basisbildes durchgeführt. Zu diesem Zweck kann im Rahmen des Shift-Map-Algorithmus ein Rearrangement-Prozess durchgeführt werden. Dies ist insofern vorteilhaft, als in dem synthetischen Trainingsbild nur solche Tonwerte vorkommen, die auch in dem natürlichen Basisbild vorkommen. Somit weist das Trainingsbild ein völlig natürlich wirkendes Erscheinungsbild auf, obwohl es ein synthetisches Bild ist.

Eine Ausführungsform der Erfindung sieht vor, dass das Umordnen von Pixeln des Basisbildes auf einen, vorzugsweise zentralen, Teilbereich des Basisbildes beschränkt wird. Dies kann in einfacher Weise durch geeignetes Festlegen der Optimierungskriterien des Shift-Map-Algorithmus erfolgen. Das Umordnen der Pixel kann somit auf denjenigen Teilbereich eines Bildes beschränkt werden, in welchem typischerweise zu erkennende Objekte erwartet werden. Ein Vorteil dieser Maßnahme besteht darin, dass der das Objekt umgebende Hintergrund überhaupt nicht verändert wird.

Gemäß einer weiteren Ausführungsform der Erfindung werden für den Shift-Map-Algorithmus Optimierungskriterien herangezogen, die eine Wahrung von Nachbarschaftsbeziehungen von Pixeln des Basisbildes, eine Vermeidung von Tonwert-Diskontinuitäten im erzeugten Trainingsbild und/oder die Wahrung einer Ähnlichkeit zwischen dem Basisbild und dem Template-Bild umfassen. Auf diese Weise kann ein besonders natürlich wirkendes Trainingsbild erzeugt werden.

Gemäß einer speziellen Ausgestaltung der Erfindung werden das Basisbild und das Template-Bild miteinander verglichen, um ein die Ähnlichkeit der Bilder angebendes Abstandsmaß zu bestimmen, und es wird dieses Abstandsmaß als Optimierungskriterium für den Shift-Map-Algorithmus herangezogen. Das Abstandsmaß liefert ein objektives Kriterium für die Ähnlichkeit der betreffenden Bilder, welches direkt in eine Optimierungsfunktion des Shift-Map-Algorithmus, wie z. B. eine Energiefunktion oder ein Potential, eingehen kann.

Bevorzugt werden sowohl das Basisbild als auch das Template-Bild in einen kanonischen Bezugsrahmen transformiert, bevor sie zur Bestimmung des Abstandsmaßes miteinander verglichen werden. In einem kanonischen Bezugsrahmen besteht eine ausreichende objektbezogene Vergleichbarkeit der beiden Bilder. Insbesondere können durch eine kanonische Transformation Verkippungen, Verzerrungen oder Verschiebungen der Objekte berücksichtigt werden.

Das Strukturmerkmal kann eine Textur und/oder ein Muster umfassen. Sofern es sich bei den zu erkennenden Objekten um Verkehrszeichen handelt, kann es sich bei dem Muster beispielsweise um die Ziffernfolge handeln, welche den Wert für eine Geschwindigkeitsbeschränkung angibt.

Das Template-Bild kann ein durch eine Kamera aufgenommenes Bild, mit anderen Worten also ein natürliches Bild sein. Es reicht aus, von einem vergleichsweise seltenen Objekt lediglich wenige Bilder oder sogar nur ein einziges Bild aufzunehmen, um daraus eine Vielzahl an unterschiedlichen Trainingsbildern für diesen Objekttyp zu erzeugen. Bei der Erzeugung des Trainingsbilds werden bei dieser Ausgestaltung also zwei natürliche Bilder miteinander kombiniert.

Eine alternative Ausführungsform der Erfindung sieht vor, dass das Template-Bild ein graphisches erzeugtes, gewissermaßen künstliches Bild ist. Im Prinzip kann somit ein Satz von Trainingsbildern zu einer Objektklasse erzeugt werden, von der kein einziges aufgenommenes Kamerabild, d. h. natürliches Bild, vorliegt. Die Flexibilität des Verfahrens ist dadurch besonders hoch.

Das Basisbild und das Trainingsbild können jeweils ein Verkehrsschild in einer Fahrbahnumgebung zeigen. Es hat sich gezeigt, dass das erfindungsgemäße Verfahren zum Erzeugen von Trainingsbildern besonders gut für das Einlernen eines Algorithmus zum Erkennen von Verkehrszeichen geeignet ist.

Die Erfindung betrifft deshalb auch ein Verfahren zum Einlernen eines Objekterkennungssystems, insbesondere eines Verkehrszeichen-Erkennungssystems, bei welchem Trainingsbilder bereitgestellt werden, die zu erkennende Objekte in einer natürlichen Objektumgebung zeigen, und mittels eines Bildverarbeitungssystems unter Verwendung der Trainingsbilder ein Erkennungs-Algorithmus zum Erkennen der Objekte entwickelt oder angepasst wird. Erfindungsgemäß wird wenigstens ein Trainingsbild durch ein Verfahren wie vorstehend beschrieben erzeugt. In der Praxis ist es bevorzugt, dass mehrere Trainingsbilder durch ein Verfahren wie vorstehend beschrieben erzeugt werden. Der Aufwand des Datenbeschaffungsprozesses kann durch eine Bereitstellung synthetischer Trainingsbilder beträchtlich verringert werden, sodass dementsprechend ein insgesamt effizienteres Einlernen des Objekterkennungssystems möglich ist.

Gemäß einer Ausführungsform dieses Verfahrens umfasst der Erkennungs-Algorithmus einen Klassifizierungs-Algorithmus zum Zuordnen eines erkannten Objekts zu einer von mehreren vorgegebenen Objekt-Klassen. Ein solcher Klassifizierer kann durch Bereitstellen synthetischer Trainingsbilder besonders gut eingelernt werden.

Die Erfindung betrifft auch ein Computerprogrammprodukt, das Programmanweisungen enthält, die ein Verfahren zum Erzeugen eines Trainingsbildes und/oder ein Verfahren zum Einlernen eines Objekterkennungssystems wie vorstehend angegeben ausführen, wenn das Computerprogramm auf einem Computer ausgeführt wird.

Die Erfindung wird nachfolgend beispielhaft unter Bezugnahme auf die Zeichnung beschrieben.
- Fig. 1: zeigt in schematischer Form verschiedene Schritte eines erfindungsgemäßen Verfahrens zum Erzeugen eines Trainingsbildes.
- Fig. 2A: zeigt ein Basisbild, ein Template-Bild und ein mittels eines erfindungsgemäßen Verfahrens aus dem Basisbild und dem Template-Bild erzeugtes Trainingsbild.
- Fig. 2B: zeigt ein weiteres Beispiel für ein Basisbild, ein Template-Bild und ein mittels eines erfindungsgemäßen Verfahrens aus dem Basisbild und dem Template-Bild erzeugtes Trainingsbild.

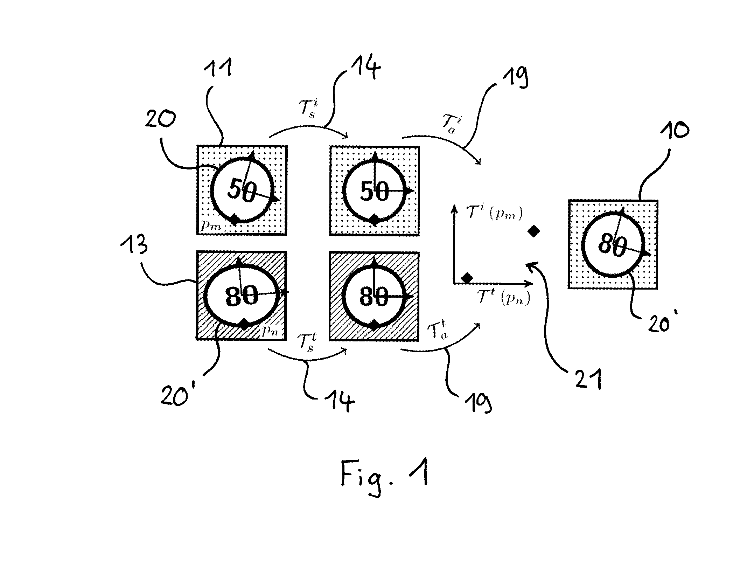

Das in Fig. 1 schematisch dargestellte Verfahren zum Erzeugen eines Trainingsbildes 10 benötigt ein Basisbild 11 und ein Template-Bild 13 als Eingangsdatensatz. Bei dem dargestellten Ausführungsbeispiel zeigen das Basisbild 11 und das Template-Bild 13 jeweils ein Verkehrszeichen 20, 20' in einer Fahrbahnumgebung. Das Verkehrszeichen 20 des Basisbildes 11 repräsentiert eine Geschwindigkeitsbeschränkung auf 50 km/h, wohingegen das Verkehrszeichen 20' des Template-Bildes 13 eine Geschwindigkeitsbeschränkung auf 80 km/h repräsentiert. Während es sich bei dem Basisbild 11 um ein von einer Kamera aufgenommenes natürliches Bild handelt, kann es sich bei dem Template-Bild 13 entweder um ein durch eine Kamera aufgenommenes natürliches Bild oder um ein graphisch erzeugtes Bild handeln. Das Basisbild 11 dient als Hintergrundmodell für das zu erzeugende Trainingsbild 10 und definiert einen Pool von Grau- oder Farbwerten, die zum Erzeugen des Trainingsbilds 10 verwendet werden. Mit anderen Worten definiert das Basisbild 11 das Erscheinungsbild des Trainingsbilds 10 in Bezug auf mögliche Grauwerte sowie die Form des Verkehrszeichens 20. Der Inhalt des Verkehrszeichens 20', also bei der dargestellten Ausführungsform die Ziffernfolge zur Angabe der Geschwindigkeitsbeschränkung, wird als Strukturmerkmal dem Template-Bild 13 entnommen und als Ersatz für das entsprechende Strukturmerkmal des Basisbilds 11 vorgesehen. Es wird also in dem Basisbild 11 das Muster des Verkehrszeichens 20 durch dasjenige des Verkehrszeichens 20' des Template-Bilds 13 ersetzt.

Da das Basisbild 11 und das Template-Bild 13 im Normalfall unterschiedliche Beleuchtungsverhältnisse wiedergeben, würde ein einfacher Austausch der den Verkehrszeichen 20, 20' entsprechenden Bildbereiche jedoch zu einem unnatürlich wirkenden Trainingsbild 10 führen. Aus diesem Grund wird mittels eines Shift-Map-Algorithmus ein Rearrangement durchgeführt, um die Strukturmerkmale auszutauschen. Shift-Map-Algorithmen sind auf dem Gebiet der digitalen Bildverarbeitung grundsätzlich bekannt und beispielsweise in dem Aufsatz von Pritch et al., "Shift-Map Image Editing", 2009 IEEE 12th International Conference on Computer Vision, Seiten 150-158 beschrieben.

Für den Shift-Map-Algorithmus werden verschiedene Optimierungskriterien festgelegt, beispielsweise in Form einer Potential- oder Energiefunktion. Eines der Optimierungskriterien ist die Wahrung einer Ähnlichkeit zwischen dem Basisbild 11 und dem Template-Bild 13. Hierfür werden das Basisbild 11 und das Template-Bild 13 mittels einer ersten Transformation 14 sowie einer nachfolgenden zweiten Transformation 19 in einen kanonischen Bezugsrahmen 21 transformiert. Bei der ersten Transformation 14 handelt es sich um eine sogenannte Shape-Transformation zur Kompensation von Verzerrungen, Verkippungen und Verschiebungen der Verkehrszeichen 20, 20'. Die zweite Transformation 19 ist eine sogenannte Appearance-Transformation, also eine Bildanpassung oder Merkmalsextraktion, welche das Basisbild 11 und das Template-Bild 13 miteinander vergleichbar macht. Durch die zweite Transformation 19 wird somit eine Invarianz des Erscheinungsbildes der Verkehrszeichen 20, 20' erzielt. Speziell kann die zweite Transformation 19 einen Merkmalsextraktor umfassen, der auf einem Histogrammausgleich, einer Varianznormalisierung, einem Kantenbild, einem "Histogram of Oriented Gradients" und/oder einer orthogonalen Transformation beruht.

In dem kanonischen Bezugsrahmen 21 sind also Verzerrungen, Verkippungen und Verschiebungen der Verkehrszeichen 20, 20' kompensiert, sodass das Basisbild 11 und das Template-Bild 13 objektiv miteinander verglichen werden können. Es wird dann ein die Ähnlichkeit der Bilder 11, 13 angebendes Abstandsmaß bestimmt, welches direkt als Optimierungskriterium für den Shift-Map-Algorithmus herangezogen wird. Weitere Optimierungskriterien sind eine Wahrung von Nachbarschaftsbeziehungen von Pixeln des Basisbildes 11 sowie eine Vermeidung von Tonwert-Diskontinuitäten im erzeugten Trainingsbild 10.

Die Potentialfunktion des Shift-Map-Algorithmus setzt sich vorzugsweise aus vier verschiedenen Termen zusammen, nämlich einem unären Pool-Potential, einem unären Objektpotential, einem unären Ähnlichkeitspotential sowie einem paarweisen Potential. Das unäre Pool-Potential definiert den Pool möglicher Positionen des Basisbildes, die für den Aufbau des Trainingsbildes 10 verwendet werden können. Das unäre Objektpotential definiert den Bereich, in welchem die Verkehrszeichen 20, 20' in dem Basisbild 11 und in dem Template-Bild 13 lokalisiert sind - hier entsprechend dem zentralen Bildbereich. Das unäre Ähnlichkeitspotential definiert ein Ähnlichkeitsmaß zwischen dem Basisbild 11 und dem Template-Bild 13 wie vorstehend erwähnt. Das paarweise Potential sorgt dafür, dass Diskontinuitäten im Trainingsbild 10 vermieden werden. Das heißt das paarweise Potential sorgt für einen ausreichend glatten Charakter der Shift Map.

Nach Ausführung des Shift-Map-Algorithmus liegt ein synthetisches Trainingsbild 10 vor, welches das allgemeine Erscheinungsbild des Basisbildes 11 aufweist, jedoch das Verkehrszeichen 20' des Template-Bilds 13 zeigt.

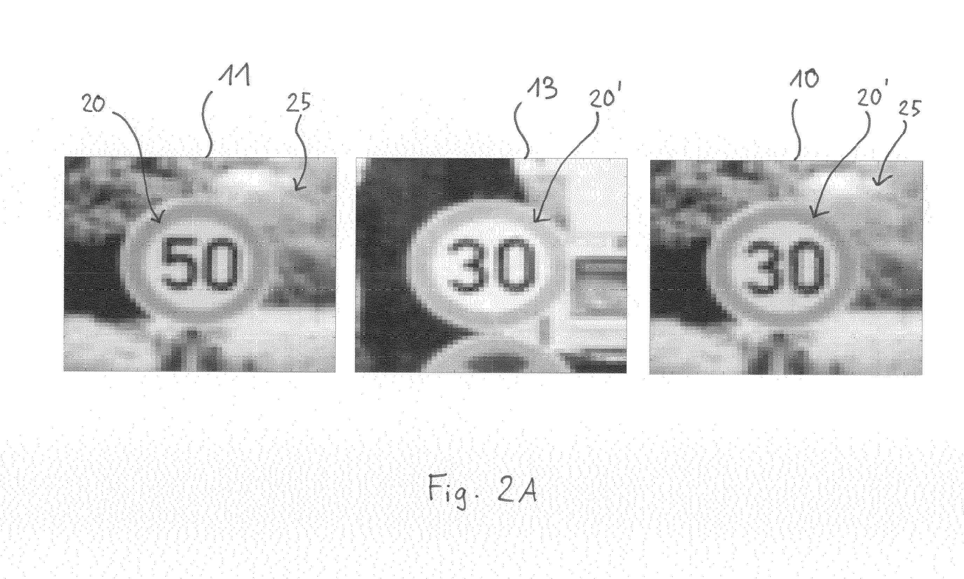

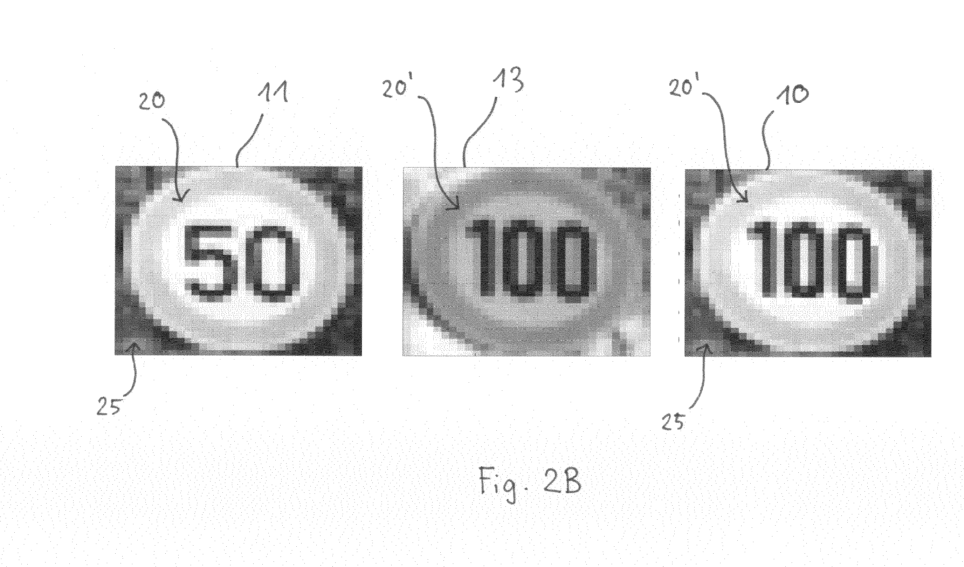

Fig. 2A und 2B zeigen jeweilige Beispiele für ein Basisbild 11, ein Template-Bild 13 sowie ein mittels des vorstehend erläuterten Algorithmus synthetisiertes Trainingsbild 10. Es ist jeweils zu erkennen, dass das Trainingsbild 10 grundsätzlich das Erscheinungsbild des Basisbildes 11 aufweist. Speziell ist der Hintergrund 25, also die Umgebung des Verkehrszeichens 20', völlig unverändert geblieben. Der Wert für die Geschwindigkeitsbeschränkung wurde jedoch entsprechend dem in dem Template-Bild 13 gezeigten Verkehrszeichen 20' geändert - in Fig. 2A von 50 auf 30 und in Fig. 2B von 50 auf 100. Da keine Bildbereiche kopiert wurden, sondern lediglich Pixel des Basisbildes 11 umgeordnet wurden, entspricht die Helligkeit des Verkehrszeichens 20' in dem Trainingsbild 10 derjenigen des Basisbilds 11 und nicht etwa derjenigen des Template-Bildes 13. Das Trainingsbild 10 weist somit ein natürliches Aussehen auf, obwohl es sich um ein synthetisiertes Bild handelt.

Mit dem beschriebenen Verfahren kann zum Beispiel eine Vielzahl von Trainingsbildern erzeugt werden, die jeweils ein Verkehrszeichen 20' mit der Geschwindigkeitsbeschränkung 30 km/h zeigen und dabei einen unterschiedlichen Hintergrund aufweisen, sofern eine geeignete Anzahl an Basisbildern 11 vorliegt, die Verkehrszeichen 20 mit anderen Geschwindigkeitsbeschränkungen zeigen. Somit kann in zeitsparender und einfacher Weise ein Satz von Trainingsbildern 10 bereitgestellt werden, welcher einem Verfahren zum Einlernen eines Verkehrszeichen-Erkennungssystems als Eingabe dient. Unter Verwendung der Trainingsbilder 10 kann dann ein Erkennungs-Algorithmus zum Erkennen der Verkehrszeichen 20 entwickelt oder angepasst werden. Ein solcher Erkennungs-Algorithmus umfasst vorzugsweise einen Klassifizierer zum Zuordnen erkannter Verkehrszeichen 20 zu einer von mehreren vorgegebenen Klassen, beispielsweise zu einer von 14 Klassen deutscher Geschwindigkeitsbeschränkungs-Schilder.

Sowohl das beschriebene Verfahren zum Erzeugen eines Trainingsbilds 10 als auch das zugehörige Verfahren zum Einlernen des Verkehrszeichen-Erkennungssystems können auf einem beliebigen Computer mit ausreichender Leistungsfähigkeit ausgeführt werden. Es versteht sich, dass ein erfindungsgemäßes Verfahren zum Erzeugen von Trainingsbildern 10 nicht nur beim Einlernen von Verkehrszeichen-Erkennungssystemen, sondern in Verbindung mit beliebigen trainierbaren kamerabasierten Objekterkennungsalgorithmen vorteilhaft ist.

### Bezugszeichenliste

- 10: Trainingsbild
- 11: Basisbild
- 13: Template-Bild
- 14: erste Transformation
- 19: zweite Transformation
- 20, 20': Verkehrszeichen
- 21: kanonischer Bezugsrahmen
- 25: Hintergrund

## Patentansprüche

1. Verfahren zum Erzeugen eines, insbesondere für das Einlernen eines kamerabasierten Objekterkennungssystems vorgesehenen, Trainingsbildes (10), welches ein zu erkennendes Objekt (20') in einer natürlichen Objektumgebung (25) zeigt, wobei das Trainingsbild (10) als synthetisches Bild durch Kombination eines von einer Kamera aufgenommenen Basisbilds (11) und eines Template-Bilds (13) erzeugt wird, indem mittels eines Shift-Map-Algorithmus ein Strukturmerkmal aus dem Basisbild (11) entfernt und durch ein dem Template-Bild (13) entnommenes Strukturmerkmal ersetzt wird.

2. Verfahren nach Anspruch 1,
**dadurch gekennzeichnet, dass**
das Ersetzen des Strukturmerkmals ausschließlich durch Umordnen von Pixeln des Basisbildes (11) durchgeführt wird.

3. Verfahren nach Anspruch 2,
**dadurch gekennzeichnet, dass**
das Umordnen von Pixeln des Basisbildes (11) auf einen, vorzugsweise zentralen, Teilbereich des Basisbildes (11) beschränkt wird.

4. Verfahren nach einem der vorstehenden Ansprüche,
**dadurch gekennzeichnet, dass** für den Shift-Map-Algorithmus Optimierungskriterien herangezogen werden, die eine Wahrung von Nachbarschaftsbeziehungen von Pixeln des Basisbildes (11), eine Vermeidung von Tonwert-Diskontinuitäten im erzeugten Trainingsbild (10) und/oder die Wahrung einer Ähnlichkeit zwischen dem Basisbild (11) und dem Template-Bild (13) umfassen.

5. Verfahren nach einem der vorstehenden Ansprüche,
**dadurch gekennzeichnet, dass** das Basisbild (11) und das Template-Bild (13) miteinander verglichen werden, um ein die Ähnlichkeit der Bilder angebendes Abstandsmaß zu bestimmen, und dass das Abstandsmaß als Optimierungskriterium für den Shift-Map-Algorithmus herangezogen wird.

6. Verfahren nach Anspruch 5,
**dadurch gekennzeichnet, dass** sowohl das Basisbild (11) als auch das Template-Bild (13) in einen kanonischen Bezugsrahmen (21) transformiert werden, bevor sie unter Verwendung des Abstandsmaßes miteinander verglichen werden.

7. Verfahren nach einem der vorstehenden Ansprüche,
**dadurch gekennzeichnet, dass** das Strukturmerkmal eine Textur und/oder ein Muster umfasst.

8. Verfahren nach einem der vorstehenden Ansprüche,
**dadurch gekennzeichnet, dass** das Template-Bild (13) ein durch eine Kamera aufgenommenes Bild ist.

9. Verfahren nach einem der Ansprüche 1 bis 7,
**dadurch gekennzeichnet, dass**
das Template-Bild (13) ein graphisch erzeugtes Bild ist.

10. Verfahren nach einem der vorstehenden Ansprüche,
**dadurch gekennzeichnet, dass**
das Basisbild (11) und das Trainingsbild (10) jeweils ein Verkehrsschild (20, 20') in einer Fahrbahnumgebung (25) zeigen.

11. Verfahren zum Einlernen eines Objekterkennungssystems, insbesondere eines Verkehrszeichen-Erkennungssystems,
bei welchem Trainingsbilder (10) bereitgestellt werden, die zu erkennende Objekte (20, 20') in einer natürlichen Objektumgebung (25) zeigen, und mittels eines Bildverarbeitungssystems unter Verwendung der Trainingsbilder (10) ein Erkennungs-Algorithmus zum Erkennen der Objekte (20, 20') entwickelt oder angepasst wird,
**dadurch gekennzeichnet, dass**
wenigstens ein Trainingsbild (10) durch ein Verfahren nach einem der vorstehenden Ansprüche erzeugt wird.

12. Verfahren nach Anspruch 11, wobei der Erkennungs-Algorithmus einen Klassifizierungs-Algorithmus zum Zuordnen eines erkannten Objekts (20, 20') zu einer von mehreren vorgegebenen Objekt-Klassen umfasst.

13. Computerprogrammprodukt, das Programmanweisungen enthält, die ein Verfahren nach einem der Ansprüche 1-10 ausführen, wenn das Computerprogramm auf einem Computer ausgeführt wird.

14. Computerprogrammprodukt, das Programmanweisungen enthält, die ein Verfahren nach Anspruch 11 oder 12 ausführen, wenn das Computerprogramm auf einem Computer ausgeführt wird.
